# EUROPÄISCHE PATENTSCHRIFT

(11) **EP 3 899 686 B1**
(45) Veröffentlichungstag und Bekanntmachung des Hinweises auf die Patenterteilung: **09.04.2025**
(21) Anmeldenummer: 19828251.9
(22) Anmeldetag: 16.12.2019
(51) Int. Cl.: G06F 1/16, H01Q 1/24, H04B 5/00

(54) **DOCKINGSTATION MIT DRAHTLOSER AUFLADUNG**
DOCKING STATION WITH WIRELESS CHARGING
STATION D'ACCUEIL AVEC CHARGE SANS FIL

(30) Priorität: 21.12.2018 CH 15922018
(43) Veröffentlichungstag der Anmeldung: 27.10.2021
(73) Patentinhaber: SWISS IT MANAGEMENT AG, 8832 Wollerau (CH)
(72) Erfinder: REINGER, Sascha, 8835 Feusisberg (CH)
(74) Vertreter: Prins Intellectual Property AG
(86) Internationale Anmeldenummer: PCT/EP2019/085360
(87) Internationale Veröffentlichungsnummer: WO 2020/127058

(56) Entgegenhaltungen:
- EP-A1- 3 288 110
- DE-A1- 102010 043 154
- DE-A1- 102012 213 363
- US-A1- 2017 185 112

## Beschreibung

### Technisches Gebiet

Die vorliegende Erfindung beschreibt eine Dockingstation, umfassend eine Rechnereinheit und eine, über eine Datenverbindung mit der Rechnereinheit verbundene Aufladeelektronik, wobei die Aufladeelektronik mindestens eine erste Aufladespule in einem Haltegehäuse aufweist, sodass ein Akku eines andockbaren Mobilgerätes mittels mindestens einer zweiten Aufladespule aufladbar ist, während gleichzeitig Daten zwischen einem Speicher des Mobilgerätes und der Rechnereinheit transferierbar sind und auf mindestens ein Peripheriegerät über Ausgänge an der Rechnereinheit transferierbar ist, sowie ein Verfahren zum Andocken eines Mobilgerätes an mindestens ein Peripheriegerät mittels einer Dockingstation und ein Verfahren zum Transferieren von Daten zwischen einer Mobilgeräteelektronik eines drahtlos aufladbaren Mobilgerätes und einer Rechnereinheit einer Dockingstation.

### Stand der Technik

Da nahezu jeder Nutzer heute ein Smartphone oder Tablett als Mobilgerät mit enormer Rechenleistung mitführt, sollte dieses der Einfachheit halber auch als persönlicher Arbeitsplatzrechner genutzt werden. Die heutigen Mobilgeräte sind derart leistungsstark, dass von der üblichen Büroanwendung über 3d-CAD-Zeichnungsprogramme und sogar Videoschnitt eigentlich alle Anwendungen bereits auf den handlichen Mobilgeräten lauffähig sind. Der Nutzer hat alle seine Daten immer dabei und kann auf weitere Rechner, wie Laptops oder Desktoprechner verzichten. Problematisch ist natürlich die Eingabe auf einem Touchscreen, einem kleineren berührungsempfindlichen Bildschirm, und auch die Ansicht auf derartigen Touchscreens ist schwierig und muss im Gebrauch oftmals vergrössert werden. Um Mobilgeräte als Arbeitsrechner dauerhaft einzusetzen, wurden Dockingstationen eingeführt.

Dockingstationen sind Geräte, die eine Verbindung von Mobilgeräten mit Peripheriegeräten, wie Bildschirme, Computermäuse oder Soundsysteme liefern. Die Verbindung fand früher ausschliesslich durch Kabel statt bzw. durch Steckeraufbauten, welche mit den Buchsen an den Mobilgeräten wirkverbindbar waren. Die Dockingstation wird durch das Stromnetz gespeist und kann ein verbundenes Mobilgerät bzw. dessen Akku auch aufladen.

Beispielsweise nutzt das Samsung DeX Pad eine physische Ankopplung in Form einer Steckverbindung, um Daten vom Mobilgerät auf einen Bildschirm zu übertragen, wobei auch eine kabelgebundene Aufladefunktion zwischen Dockingstation und Mobilgerät existiert. Da das Mobilgerät via Kabel direkt an die Dockingstation angeschlossen wird, ist ein unbefugtes Abhören des Datentransfers zwischen Mobilgerät und Dockingstation ausgeschlossen.

In der EP2745351 wurden bereits die Nachteile einer physischen Verbindung eines Mobilgerätes an oder in einer Dockingstation erkannt. Als Ausweg für die Datenübertragung beim Verbinden des Mobilgerätes mit der Dockingstation, wurde der Wi-Fi-Standard gewählt. Die Dockingstation und das Mobilgerät weisen Mittel auf, um im Frequenzbereich eines WLAN-Netzwerks Daten auszutauschen.

In erweiterten Ausführungsformen weisen diese Dockingstation auch Möglichkeiten zur drahtlosen Aufladung des Mobilgerätes auf, während es in der Nähe der Dockingstation gelagert ist, wobei nicht klar ist, ob die drahtlose Aufladung und die Datenübertragung über WLAN gleichzeitig von statten gehen. In der EP2745351 wurde erkannt, dass sich Funksignale aus der Umgebung in der Dockingstation störend überlagern können, was zu Problemen bei der Datenübertragung führt. Die Lösung dafür war die Einführung einer Antenneneffizienz-Reduzierungseinrichtung in der Dockingstation bzw. im Mobilgerät, welche die Störungen beseitigen kann. Diese Zusatzeinrichtung ist aber mit weiterem apparativem Aufwand verbunden und hält eventuell Käufer davon ab, derartige dafür geeignete Mobilgeräte und/oder Dockingstationen zu kaufen. Ein weiterer Aspekt ist aber auch die Abhörsicherheit eines gekoppelten Mobilgerätes in einer Dockingstation. Bei Verbindung der Dockingstation und des Mobilgerätes in einem WLAN-Netzwerk, wäre es möglich, dass jemand, der unbefugt Zugang zum gleichen WLAN-Netzwerk erlangt hat, die Datenübertragungen abhört. Dabei muss dieser Unbefugte nur im gleichen WLAN-Netz sein, nicht aber in unmittelbarer Nähe der Dockingstation. Ein solch unbefugtes Abhören über grössere Distanz kann die EP2745351 nicht verhindern.

Bislang wurde keine Lösung für eine abhörsichere Dockingstation mit drahtloser Aufladefunktion und drahtloser Datenübertragung zwischen Dockingstation und Mobilgerät präsentiert.

DE102010043154 offenbart ein portables elektronisches Endgerät mit einer optischen Datenübertragungseinrichtung zur Leiter-ungebundenen, optischen, bidirektionalen Datenkommunikation mit einem externen Basisgerät und darüber hinaus mit einer Leiter-ungebundenen Energieversorgungseinrichtung zur Energieaufnahme mittels induktiver Kopplung aus einem von dem externen Basisgerät abgestrahlten Magnetfeld und zur Versorgung der implementierten Funktionseinheiten und der Datenübertragungseinrichtung mit Energie basierend auf der aus dem externen Magnetfeld entnommenen Energie.

### Darstellung der Erfindung

Die vorliegende Erfindung hat sich zur Aufgabe gestellt eine Dockingstation zum drahtlosen Energie- und Datenaustausch zwischen Dockingstation und einem Mobilgerät zu schaffen, dessen Abhörsicherheit gesteigert ist, wobei keine zusätzlichen Einrichtungen an der Dockingstation oder dem Mobilgerät angebracht werden müssen. Dadurch kann das Mobilgerät als persönlicher Arbeitsplatzrechner verwendet werden, ohne, dass der Nutzer Angst vor unbefugtem Abhören seiner Daten haben muss.

Diese Aufgabe wird mit einer Dockingstation nach Patentanspruch 1 gelöst.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.

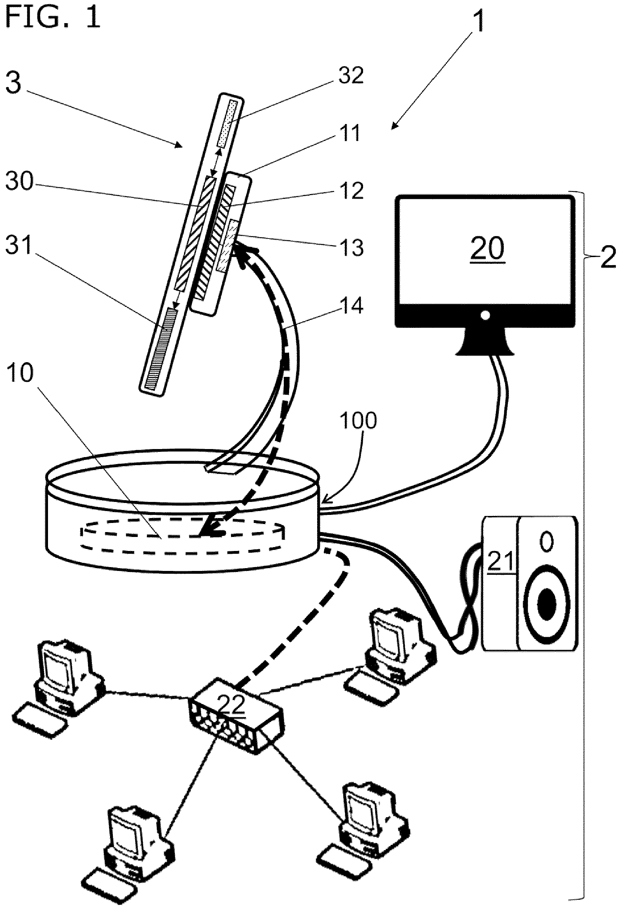

- Figur 1: zeigt eine schematische Ansicht einer Dockingstation mit angedocktem Mobilgerät und verschiedenen Peripheriegeräten, während
- Figur 2: eine schematische Detailansicht in Röntgenansicht des Andockbereiches zwischen Mobilgerät und Dockingstation zeigt.
- Figur 3: zeigt eine schematische Rückansicht der Dockingstation mit angedocktem Mobilgerät.

### Beschreibung

Hier wird eine Dockingstation 1 beschrieben, an welcher ein Mobilgerät 3, insbesondere ein Smartphone oder Tabletcomputer angedockt werden kann, wodurch das Mobilgerät 3 an Peripheriegeräte 2 anschliessbar ist. Diese Dockingstation 1 umfasst eine drahtlose Aufladefunktion, mit deren Bauteilen zusätzlich eine abhörsichere Datenübertragung über elektromagnetische Wellen bzw. über Funk zwischen dem Mobilgerät 3 und der Dockingstation 1 ermöglicht ist. Während die drahtlose Aufladung bei einem Abstand zwischen Mobilgerät 3 und Dockingstation 1 über bis zu fünf Zentimeter erfolgen kann, kann die Datenübertragung auf bis zu fünf Metern Abstand stattfinden.

Die Dockingstation 1 umfasst eine Rechnereinheit 10, welche mit Ausgängen 100 ausgestattet ist, an welchen Peripheriegeräte 2, unter anderem Bildschirme 20, Soundsysteme 21 oder Rechnernetzwerke 22 anschliessbar sind. Neben der Rechnereinheit 10 umfasst die Dockingstation 1 ein Haltegehäuse 11, welches örtlich beabstandet von der Rechnereinheit 10 über eine Datenverbindung 14 verbunden angeordnet ist. Im Haltegehäuse 11 ist mindestens eine erste Aufladespule 12 angeordnet. Zur Steuerung der mindestens einen ersten Aufladespule 12 ist eine Aufladeelektronik 13 vorgesehen, welche hier ebenfalls im Haltegehäuse 11 angeordnet ist. Die Aufladeelektronik 13 kann aber auch in der Rechnereinheit 10 angeordnet sein oder Teil der Rechnereinheit 10 sein. Über entsprechende Kabel von der Aufladeelektronik 13 zur ersten Aufladespule 12, wird ein induktives Aufladen durch entsprechende Ausbildung von Induktionsströmen in der ersten Aufladespule 12 bei Frequenzen im kHz-Bereich erzeugt.

Im anzudockenden Mobilgerät 3 muss mindestens eine zweite Aufladespule 30, ein Akku 31 und eine Mobilgeräteelektronik 32 verbaut sein, damit beim Andocken des Mobilgerätes 3 an das Haltegehäuse 11 eine drahtlose Aufladung erfolgen kann. Wenn der Abstand zwischen Mobilgerät 3 und dem Haltegehäuse 11 bzw. zwischen erster und zweiter Aufladespule 12, 30 kleinergleich fünf Zentimeter ist, dann kann eine drahtlose Aufladung stattfinden.

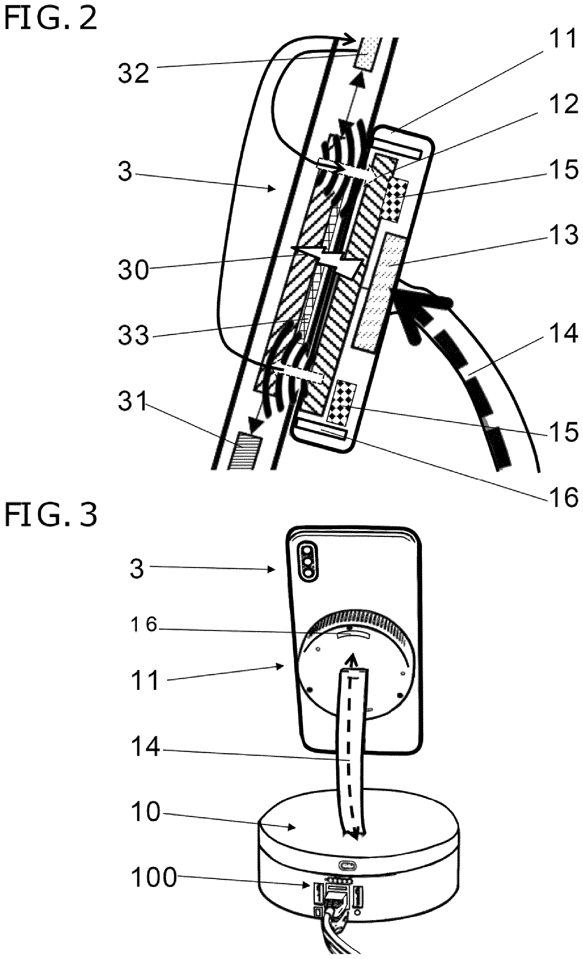

Die mindestens eine erster Aufladespule 12 induziert aufgrund einer durch die Aufladeelektronik 13 gesteuerte angelegte Wechselspannungen bzw. induzierte Ströme in der ersten Aufladespule 12, induzierte Ströme in der zweiten Aufladespule 30 im Mobilgerät 3. Die in der zweiten Aufladespule 30 induzierten Ströme laden den Akku 31 des Mobilgerätes 3 auf, wobei die Aufladung von der Mobilgeräteelektronik 32 gesteuert wird. In Figur 2 ist die Induktion, welche bevorzugt mittels resonanter induktiver Kopplung der ersten und zweiten Aufladespulen 12, 30 erreicht wird, durch einen Blitz schematisch dargestellt. Hier wird eine Leistung von einigen Watt von der ersten Aufladespule 12 an die zweite Aufladespule 30 abgegeben.

Um das Mobilgerät 3 am Haltegehäuse 11 zu halten, ist mindestens eine Mobilgerätmagnet 33 am Mobilgerät 3 und mindestens ein Haltemagnet 15 am bzw. im Haltegehäuse 11 angeordnet. Bevorzugt ist der mindestens eine Haltemagnet 15 als offener Ring ausgeführt. Um eine Überhitzung des Mobilgerätes 3 und/oder des Haltegehäuses 11 bei der drahtlosen Aufladung zu verhindern, sind hier Kühlungsschlitze 16 am Haltegehäuse 11 angeordnet, die eine kühlende Luftzirkulation erlauben.

Auch die Datenübertragung findet drahtlos zwischen der mindestens einen ersten Aufladespule 12 und der mindestens einen zweiten Aufladespule 30 der drahtlosen Aufladeeinrichtung statt, wobei eine Datenübertragungsrate von mindestens 100kbit/s, bevorzugt mehreren Megabit pro Sekunde erreicht werden sollte. Andernfalls kann mit angedocktem Mobilgerät 3 keine flüssige Bildschirmdarstellung auf einem gekoppelten Bildschirm 20 erreicht werden. Beide Aufladespulen 12, 30 dienen hier zusätzlich als Datenübertragungsantennen, die jeweils Funksignale abstrahlen und empfangen können, wodurch ein Datenstrom in beide Richtungen versendet werden kann. Die ausgesandten Datensignale sind als Wellensymbole in Figur 2 zwischen erster Aufladespule 12 und zweiter Aufladespule 30 jeweils mit einer Pfeilrichtung dargestellt. Beide Aufladespulen 12, 30 werden neben der Aufladung als Sende- und Empfangsspulen genutzt. Damit Daten übertragen werden können, dürfen Mobilgerät 3 und Dockingstation 1 und damit die erste Aufladespule 12 und die zweite Aufladespule 30 maximal fünf Meter beabstandet sein.

Über beide Aufladespulen 12, 30 verbinden sich die Rechnereinheit 10 der Dockingstation und die Mobilgerätelektronik 32 des Mobilgeräts 3 nicht mit einem Funknetz in der Umgebung, sondern es werden Funksignale direkt zwischen den Aufladespulen 12, 30 und über einen geringen Bereich von bis zu maximal 5 Metern Funkreichweite übertragen. Entsprechend kann die Funkübertragung von Daten nur stattfinden, wenn der Abstand zwischen Mobilgerät 3 und Dockingstation 1 maximal fünf Meter beträgt.

Von der ersten Aufladespule 12 empfangene Funksignale werden zur Aufladeelektronik 13 und über die Datenverbindung 14 an die Rechnereinheit 10 weitergeleitet, wo die Signale an die Peripheriegeräte 2 geleitet werden. Die entsprechend umgekehrte Richtung nehmen Datensignale von Peripheriegeräten 2 zur Rechnereinheit 10 über die Datenverbindung 14, die Aufladeelektronik 13 und die erste Aufladespule 12 kabelgebunden, bevor die Daten drahtlos von der ersten Aufladespule 12 an die mindestens eine zweite Aufladespule 30 versandt werden. Nach Empfang in der Aufladespule 30 werden die Daten kabelgebunden an die Mobilgeräteelektronik 32 weitergeleitet, wo die Daten verarbeitet werden können. Ein Computerprogramm sorgt für den drahtlosen Datenversand und Datenempfang zwischen den Aufladespulen 12, 30 jeweils auf Seiten der Mobilgerätelektronik 32 und der Rechnereinheit 10.

Damit die Rechnereinheit 10 von den Funksignalen möglichst ungestört bleibt, ist die Rechnereinheit 10 bevorzugt örtlich vom Haltegehäuse 11 und den Aufladespulen 12, 30 beabstandet.

Es wird gezielt kein bekanntes lokales Funknetzwerk nach einem bekannten Standard für den Datenaustausch zwischen Mobilgerät 3 und Dockingstation 1 verwendet, womit der Datenaustausch zwischen Mobilgerät 3 und Dockingstation 1 über einen kurzen Abstand abhörsicher ist. Selbst, wenn sich ein Unbefugter in das Funknetzwerk zwischen den Aufladespulen 12, 30 einschleichen könnte, müsste dieser in geringem Abstand zu den Aufladespulen 12, 30 bleiben, um Daten abzuführen.

Die Aufladespulen 12, 30 erfüllen hier eine doppelte Funktion. Mit den gleichen Mitteln, welche für die drahtlose Aufladung genutzt werden, kann hier auch eine abhörsichere Datenübertragung mit Datenraten bis zu einigen Gbit/s erreicht werden. Die Gestaltung der Aufladespulen 12, 30, dass Funktsignale mit derart hohen Datenraten gesendet und empfangen werden können, sind bekannt. Dabei sollten die Aufladespulen entsprechend induktiv resonant gekoppelt ausgestaltet sein. Dem Fachmann sind geeignete Ausgestaltungen der Aufladespulen 12, 30 bekannt.

Die drahtlose Aufladung wird bevorzugt so gesteuert, dass die Mobilgeräteelektronik 32 erkennt, wenn die Aufladung aktiviert werden muss. Die elektronische Verbindung zwischen Mobilgerät 3 und Dockingstation 1 ist drahtlos, wobei für den Datentransfer kein übliches Protokoll verwendet wird, bzw. das Senden/Empfangen von den Induktionsspulen bzw. Aufladespulen 12, 30 beidseitig ausgeführt wird. Verfahren zum Transferieren von Daten zwischen einer Mobilgeräteelektronik 32 eines drahtlos aufladbaren Mobilgerätes 3 und einer Rechnereinheit 10 einer Dockingstation 1 mittels Aufbau eines Funknetzes zwischen der mindestens einen ersten Aufladespule 12 und der mindestens einen zweiten Aufladespule 30 in einem Abstand von weniger als fünf Metern und einer Datenübertragungsrate von mindestens 100kbit/s mit denselben Aufladespulen 12, 30, die auch für die drahtlose Aufladung sorgen.

In einer bevorzugten Ausführungsform der Dockingstation 1 sind die Bauteile der Dockingstation 1 in einem Gehäuse eines Bildschirms oder eines Tabletcomputers verbaut. Beispielsweise kann das Haltegehäuse 11 Teil eines Gehäuses eines Bildschirms oder eines Tabletcomputers sein, sodass auch die Ankopplung des Mobilgerätes 3 an diesem Gehäuse erfolgt. Die Rechnereinheit 10 kann fest im Gehäuse des Bildschirms oder Tabletcomputers eingebaut sein, während das Haltegehäuse 11 örtlich vom Gehäuse des Bildschirms oder Tabletcomputers beabstandet, aber mit dem Gehäuse verbunden bleibt. Das Haltegehäuse 11 bildet dann eine Ablage für das Mobilgerät 3 in der Nähe des Bildschirms oder Tabletcomputers. In dieser Ausführungsform sind die Dockingstation 1 bzw. die Bauteile der Dockingstation 1 nicht nur elektronisch an mindestens einen Bildschirm oder Tabletcomputer angeschlossen, sondern zusätzlich im Gehäuse des Bildschirms oder Tabletcomputers positioniert gelagert.

### Bezugszeichenliste

1 Dockingstation mit drahtloser Aufladefunktion
10 Rechnereinheit
   100 Ausgänge (USB/USB-C/LAN/HDMI/etc.)
11 Haltegehäuse
12 mindestens eine erste Aufladespule (erste Sende- und Empfangsspule)
13 Aufladeelektronik
14 Datenverbindung zur Rechnereinheit
15 Haltemagnet
16 Kühlungsschlitz in Haltegehäuse
2 Peripheriegerät
   20 Bildschirm
   21 Soundsysteme/Audioverstärker und/oder Boxen
   22 Rechnernetzwerk
3 Mobilgerät
   30 mindestens eine zweite Aufladespule (zweite Sende- und Empfangsspule)
   31 Akku
   32 Mobilgerätelektronik
   33 Mobilgerätmagnet

## Patentansprüche

1. Dockingstation (1), umfassend eine Rechnereinheit (10) und eine, über eine Datenverbindung (14) mit der Rechnereinheit (10) verbundene Aufladeelektronik (13), wobei die Aufladeelektronik (13) mindestens eine erste Aufladespule (12) in einem Haltegehäuse (11) aufweist, sodass ein Akku (31) eines andockbaren Mobilgerätes (3) mittels mindestens einer zweiten Aufladespule (30) aufladbar ist, während gleichzeitig Daten zwischen einem Speicher des Mobilgerätes (3) und der Rechnereinheit (10) transferierbar sind und auf mindestens ein Peripheriegerät (20, 21, 22) über Ausgänge (100) an der Rechnereinheit (10) transferierbar sind,
**dadurch gekennzeichnet, dass**
das die mindestens eine erste Aufladespule (12) und die mindestens eine zweite Aufladespule (30) derart gestaltet und angeschlossen sind, dass diese einerseits mittels Rechnereinheit (10) und andererseits mittels Mobilgerätelektronik (32) derart ansteuerbar sind, dass neben der Energieübertragung zusätzlich auch die zu transferierenden Daten zwischen Mobilgerät (3) und Dockingstation (1) über, in der mindestens einen ersten (12) und zweiten Aufladespule (30) erzeugte und empfangene, Wechselfelder im Nahfeldbereich mittels derselben Spulen (12, 30) direkt mit einer Datenübertragungsrate von mindestens 100kbit/s übertragbar sind und diese Daten zum mindestens einen, mit der Dockingstation (1) verbundenen Peripheriegerät weitergeleitet werden.

2. Dockingstation (1) nach Anspruch 1, wobei Daten von der Rechnereinheit (10) über die mindestens eine erste Aufladespule (12) via der mindestens einen zweiten Aufladespule (30) und der Mobilgerätelektronik (32) und zurück direkt übertragbar sind.

3. Dockingstation (1) nach einem der vorhergehenden Ansprüche, wobei die Rechnereinheit (10) örtlich beabstandet von der Aufladeelektronik (13) und der mindestens einen ersten Aufladespule (12) angeordnet ist und eine Kabelverbindung zwischen Aufladeelektronik (13), der mindestens einen ersten Aufladespule (12) und der Rechnereinheit (10) besteht.

4. Dockingstation (1) nach einem der vorhergehenden Ansprüche, wobei im Haltegehäuse (11) mindestens ein Haltemagnet (15) angeordnet ist, als offener Ring ausgeführt, welcher mit einem Mobilgerätmagnet (33) wirkverbindbar ist, wenn das Mobilgerät (3) der Dockingstation angenähert ist.

5. Dockingstation (1) nach einem der vorhergehenden Ansprüche, wobei aus dem Haltegehäuse (11) mindestens ein Kühlungsschlitz (16) ausgespart ist, welcher Abwärme bei der drahtlosen Aufladung des Akkus (31) des Mobilgerätes (3) abgibt.

6. Dockingstation (1) nach einem der vorhergehenden Ansprüche, wobei sämtliche Bauteile der Dockingstation (1) in einem Gehäuse eines Bildschirms oder eines Tabletcomputers integriert sind bzw. Teil eines Gehäuses eines Bildschirms oder Tabletcomputers sind.

7. Dockingstation (1) nach Anspruch 6, wobei das Haltegehäuse (11) der Dockingstation aus dem Gehäuse des Bildschirms oder Tabletcomputers herausragt bzw. einen Teil des Gehäuses des Bildschirm oder Tablettcomputers bildet.

8. Verfahren zum Transferieren von Daten zwischen einer Mobilgeräteelektronik (32) eines drahtlos aufladbaren Mobilgerätes (3) und einer Rechnereinheit (10) einer Dockingstation (1) mittels Aufbau eines Funknetzes bei Verwendung einer Dockingstation (1) gemäss eines der Ansprüche 1 bis 7.

9. Verfahren nach Anspruch 8, wobei das Funknetz zwischen der mindestens einen ersten Aufladespule (12) und der mindestens einen zweiten Aufladespule (30) in einem Abstand von weniger als fünf Metern erzeugt wird.

## Claims

1. Docking station (1), comprising a computer unit (10) and a charging electronics (13) connected to the computer unit (10) via a data connection (14), wherein the charging electronics (13) have at least one first charging coil (12) in a holding housing (11), so that a battery (31) of a dockable mobile device (3) can be charged by means of at least a second charging coil (30), while at the same time data is transmitted between a memory of the mobile device (3) and the computer unit (10) and are transferable to at least one peripheral device (20, 21, 22) via outputs (100) on the computer unit (10),
**characterized in**
**that** the at least one first charging coil (12) and the at least one second charging coil (30) are designed and connected in such a way that these can be controlled on the one hand by means of the computer unit (10) and on the other hand by means of mobile device electronics (32) in such a way that in addition to the energy transmission, the transferring data between mobile device (3) and docking station (1) in which at least one first (12) and second charging coil (30) generated and received are transmittable in the near-field range by means of the same coils (12, 30) and such data are forwardable to at least one peripheral device connected to the docking station (1).

2. A docking station (1) according to claim 1, wherein data from the computer unit (10) via the at least one first charging coil (12) via the at least one second charging coil (30) and the mobile device electronics (32) and back are directly transferable.

3. A docking station (1) according to any one of the preceding claims, wherein the computer unit (10) is located at a distance from the charging electronics (13) and the at least one first charging coil (12) and a cable connection between the charging electronics (13) which consists of at least one first charging coil (12) and the computer unit (10).

4. A docking station (1) according to any one of the preceding claims, wherein at least one holding magnet (15) is arranged in the retaining housing (11) which is actively connectable with a mobile device magnet (33) when the mobile device (3) is approached to the docking station.

5. A docking station (1) according to any one of the preceding claims, wherein at least one cooling slot (16) is recessed from the retaining housing (11), which emits waste heat during the wireless charging of the battery (31) of the mobile device (3).

6. A docking station (1) according to any one of the preceding claims, wherein all components of the docking station (1) are integrated into a housing of a display or tablet computer or are part of a housing of a display or tablet computer.

7. A docking station (1) according to claim 6, wherein the retaining housing (11) of the docking station protrudes from the housing of the display or tablet computer or forms a part of the housing of the display or tablet computer.

8. A method for transferring data between a mobile device electronics (32) of a wirelessly rechargeable mobile device (3) and a computing unit (10) of a docking station (1) by means of setting up a radio network when using a docking station (1) according to any one of claims 1 to 7.

9. The method of claim 8, wherein the radio network is generated between the at least one first charging coil (12) and the at least one second charging coil (30) at a distance of less than five meters.

## Revendications

1. Station d'accueil (1), comprenant une unité d'ordinateur (10) et une électronique de charge (13) connectée à l'unité d'ordinateur (10) via une connexion de données (14), dans laquelle l'électronique de charge (13) comporte au moins une première bobine de charge (12) dans un boîtier de maintien (11), de sorte qu'une batterie (31) d'un dispositif mobile dockable (3) peut être chargée au moyen d'au moins une seconde bobine de charge (30), en même temps, des données sont transmises entre une mémoire du dispositif mobile (3) et de l'unité informatique (10) et sont transférables à au moins un dispositif périphérique (20, 21, 22) via des sorties (100) sur l'unité informatique (10),
**caractérisé en ce**
**que** la ou les premières bobines de charge (12) et la ou les secondes bobines de charge (30) sont conçues et connectées de telle manière qu'elles peuvent être commandées sur d'une part au moyen de l'unité informatique (10) et d'autre part au moyen de l'électronique du dispositif mobile (32) de telle sorte qu'en plus de la transmission d'énergie, le transfert de données entre le dispositif mobile (3) et la station d'accueil (1) dans laquelle au moins une première (12) bobine de charge (30) et une seconde bobine de charge (30) générées et reçues sont transmissibles dans la plage du champ proche au moyen des mêmes bobines (12, 30) et ces données peuvent être transmises à au moins un périphérique connecté à la station d'accueil (1).

2. Station d'accueil (1) selon la revendication 1, dans laquelle les données de l'unité informatique (10) via la ou les premières bobines de charge (12) via la ou les secondes bobines de charge (30) et l'électronique du dispositif mobile (32) et inversement sont directement transférables.

3. Station d'accueil (1) selon l'une quelconque des revendications précédentes, dans laquelle l'unité informatique (10) est située à une distance de l'électronique de charge (13) et de la ou des premières bobines de charge (12) et d'une connexion par câble entre l'électronique de charge (13) qui consiste en au moins une première bobine de charge (12) et l'unité informatique (10).

4. Station d'accueil (1) selon l'une quelconque des revendications précédentes, dans laquelle au moins un aimant de maintien (15) est disposé dans le boîtier de retenue (11) qui peut être activement connecté à un aimant de dispositif mobile (33) lorsque le dispositif mobile (3) est approché de la station d'accueil.

5. Station d'accueil (1) selon l'une quelconque des revendications précédentes, dans laquelle au moins un emplacement de refroidissement (16) est encastré dans le boîtier de retenue (11), qui émet de la chaleur résiduelle lors de la charge sans fil de la batterie (31) du dispositif mobile (3).

6. Station d'accueil (1) selon l'une quelconque des revendications précédentes, dans laquelle tous les composants de la station d'accueil (1) sont intégrés dans un boîtier d'un écran ou d'une tablette ou font partie d'un boîtier d'un écran ou d'une tablette.

7. Station d'accueil (1) selon la revendication 6, dans laquelle le boîtier de retenue (11) de la station d'accueil dépasse du boîtier de l'écran ou de la tablette ou fait partie du boîtier de l'écran ou de la tablette.

8. Procédé de transfert de données entre l'électronique d'un dispositif mobile (32) d'un dispositif mobile rechargeable sans fil (3) et une unité de calcul (10) d'une station d'accueil (1) au moyen de la mise en place d'un réseau radio lors de l'utilisation d'une station d'accueil (1) selon l'une quelconque des revendications 1 à 7.

9. Procédé selon la revendication 8, dans lequel le réseau radio est généré entre la ou les premières bobines de charge (12) et la ou les secondes bobines de charge (30) à une distance inférieure à cinq mètres.
